# FASCICULE DE BREVET EUROPEEN

(11) **EP 1 311 422 B1**
(45) Date de publication et mention de la délivrance du brevet: **17.11.2004**
(21) Numéro de dépôt: 01960854.6
(22) Date de dépôt: 01.08.2001
(51) Int. Cl.: B62D 21/11

(54) **DISPOSITIF DE LIAISON ENTRE UN BERCEAU SUSPENDU ET UNE CAISSE DE VEHICULE AUTOMOBILE**
VERBINDUNGSTÜCK ZWISCHEN EINEM GEFEDERTEN HILFSRAHMEN UND EINER KAROSSERIE EINES KRAFTFAHRZEUGES
CONNECTION DEVICE BETWEEN A SUSPENDED CRADLE AND A MOTOR VEHICLE BODY

(30) Priorité: 25.08.2000 FR 0010925
(43) Date de publication de la demande: 21.05.2003
(73) Titulaire: Renault s.a.s., 92100 Boulogne Billancourt (FR); Augade, Philippe, 78460 Chevreuse (FR)
(72) Inventeur: KERVOERN, Sébastien, F-92500 Rueil Malmaison (FR)
(86) Numéro de dépôt international: PCT/FR2001/002510
(87) Numéro de publication internationale: WO 2002/016190

(56) Documents cités:
- FR-A- 2 767 750
- US-A- 4 059 286

## Description

La présente invention se rapporte à un dispositif de liaison entre un berceau suspendu et une caisse de véhicule automobile.

On connaît de la technique antérieure un berceau suspendu, c'est-à-dire un berceau relié à une caisse de véhicule automobile notamment par deux biellettes.

Du fait qu'il est en partie découplé de la caisse du véhicule, un tel berceau permet d'atténuer les vibrations provenant d'une part du roulement du véhicule sur la chaussée, et d'autre de part du moteur supporté par ce berceau.

Malgré ces avantages, un tel berceau voir à ce sujet le document US-A-4 059 286 en ligne avec le préambule de la revendication 1, est relativement coûteux à installer étant donné qu'il nécessite le montage de moyens d'articulation des biellettes.

La présente invention a pour but de remédier à cet inconvénient.

On atteint ce but de l'invention avec un dispositif de liaison entre un berceau suspendu supportant deux bras de suspension articulés et une caisse de véhicule automobile du type comprenant deux biellettes interposées entre ledit berceau et ladite caisse, remarquable en ce qu'il comprend des moyens au moins en partie communs pour relier lesdites biellettes et lesdits bras de suspension audit berceau.

Grâce à ces caractéristiques, on utilise les moyens d'articulation des bras de suspension sur le berceau pour relier les biellettes à ce berceau, ce qui permet de faire l'économie de moyens d'articulation propres à ces biellettes, et ainsi de réduire le coût de fabrication d'un véhicule équipé d'un tel berceau.

Suivant d'autres caractéristiques de ce dispositif :
- chacun desdits bras de suspension étant articulé sur ledit berceau en un point d'articulation avant et en un point d'articulation arrière, lesdits moyens communs sont situés auxdits points d'articulation avant,
- lesdits moyens communs comprennent des moyens de palier solidaires dudit berceau et des moyens de vis et d'écrou reliant lesdites biellettes et lesdits bras de suspension auxdits moyens de palier,
- lesdits moyens communs comprennent des moyens d'amortissement des vibrations,
- lesdits moyens d'amortissement des vibrations comprennent des plots en matériau élastique,
- lesdites biellettes présentent une concavité orientée vers l'intérieur dudit véhicule automobile.

La présente invention a également pour objet un véhicule automobile comprenant une caisse supportant un berceau suspendu, remarquable en ce que ledit berceau est conforme à ce qui précède.

Suivant une autre caractéristique de ce véhicule automobile, ledit berceau suspendu est placé à l'avant de ladite caisse.

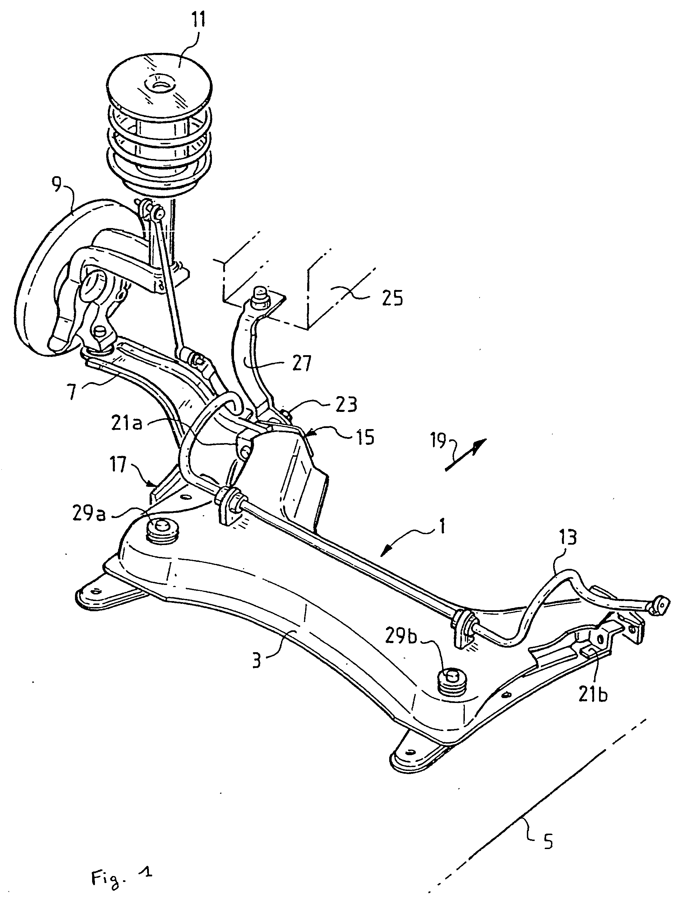

D'autres caractéristiques et avantages du dispositif selon l'invention apparaîtront à la lecture de la description qui va suivre et à l'examen du dessin annexé, dont l'unique figure est une vue en perspective d'un berceau suspendu sur une caisse de véhicule automobile notamment au moyen du dispositif selon l'invention.

Comme on peut le voir sur cette figure, ce berceau suspendu 1 comprend essentiellement un organe rigide en forme de plaque 3 destiné à supporter le moteur (non représenté) d'un véhicule automobile 5.

Ce berceau suspendu supporte deux bras de suspension articulés, un seul 7 de ces bras ayant été représenté.

Chacun de ces bras supporte une roue (non représentée) du véhicule 5, ainsi que plusieurs organes parmi lesquels un disque de frein 9 et un ensemble d'amortisseur 11.

Une barre anti-roulis 13 peut être montée pivotante sur la plaque 3.

De manière préférée, et comme cela est représenté, chaque bras de suspension 7 est .articulé .sur la plaque 3 en un point d'articulation avant 15 et en un point d'articulation arrière .17, l'avant et l'arrière s'entendant par rapport au sens de la marche du véhicule 5 tel qu'il est indiqué par la flèche 19.

L'articulation aux points avant 15 et arrière 17 peut typiquement être réalisée avec des moyens de palier 21a, 21b solidaires de la plaque 3, et avec des moyens de vis et d'écrou 23 reliant chaque bras de suspension 7 à ces moyens de palier.

Des plots en matériau élastique (ou « silent blocks » en anglais) non représentés peuvent avantageusement être placés sur les moyens de vis et d'écrou 23, entre les bras de suspension 7 et les moyens de palier 21a, 21b.

Deux biellettes relient la plaque 3 à l'avant (ou, en variante, à l'arrière) de la caisse 25 du véhicule 5, une seule 27 de ces biellettes étant représentée.

Chacune des biellettes 27 prés.ente de préférence une concavité tournée vers l'intérieur du véhicule 5.

Selon une caractéristique essentielle de l'invention, les moyens pour relier les biellettes 27 à la plaque 3 sont communs à ceux permettant de relier les bras de suspension 7 à cette plaque, aux points d'articulation avant 15.

Ces moyens communs peuvent comprendre les moyens de palier 21a, 21b et les moyens de vis et d'écrou 23 susmentionnés traversant à la fois les biellettes 27 et les bras de suspension 7.

La plaque 3 est en outre classiquement reliée à la caisse 25 par des moyens de fixation arrière 29a, 29b.

Des plots en matériau élastique (non représentés) peuvent avantageusement être placés sur les moyens de vis et d'écrou, entre les biellettes 27 et les moyens de palier 21a, 21b.

En outre, de tels plots peuvent également être interposés entre les biellettes 27 et la caisse 25, et entre les moyens de fixation arrière 29a, 29b et la caisse 25.

Le mode de fonctionnement et les avantages du dispositif selon l'invention résultent directement de la description qui précède.

Les deux biellettes articulées 27 permettent de découpler le berceau 1 de la caisse 25 du véhicule 5, et ainsi d'atténuer les vibrations provenant d'une part du roulement du véhicule sur la chaussée, et d'autre part du moteur supporté par ce berceau.

La présence de plots élastiques entre la plaque 3 et la caisse 25, entre cette plaque et les bras de suspension 7, entre cette plaque et les biellettes 27, et entre ces biellettes et la caisse 25, contribuent à l'atténuation des vibrations susmentionnées.

Du fait que l'on utilise une partie des moyens d'articulation des bras de suspension 7 sur la plaque 3 pour relier les biellettes 27 à ce berceau, on s'affranchit de moyens d'articulation propres à ces biellettes, ce qui permet de limiter le nombre de pièces et d'opérations élémentaires de montage nécessaires, et ainsi de réduire le coût de fabrication du véhicule 5.

On notera par ailleurs que le fait que les biellettes 27 présentent une concavité tournée vers l'intérieur du véhicule 5 permet d'une part de libérer suffisamment d'espace au-dessus de la plaque 3 pour supporter le moteur (non représenté), et d'autre part pour éviter une interférence avec ce moteur et avec la boîte de vitesses (non représentée) en cas de choc déformant le véhicule 5.

Bien entendu, la présente invention n'est pas limitée au mode de réalisation décrit et représenté, fourni à titre d'exemple illustratif et non limitatif.

C'est ainsi par exemple que chacun des bras de suspension pourrait n'être relié à la plaque 3 qu'en un seul point d'articulation.

## Revendications

1. Dispositif de liaison entre un berceau suspendu (1) supportant deux bras de suspension articulés (7) et une caisse (25) de véhicule automobile (5) du type comprenant deux biellettes (27) interposées entre ledit berceau (1) et ladite caisse (25), **caractérisé en ce qu'**il comprend des moyens au moins en partie communs (21a, 21b, 23) pour relier lesdites biellettes (27) et lesdits bras de suspension (7) audit berceau (1).

2. Dispositif selon la revendication 1, chacun desdits bras de suspension (7) étant articulé sur ledit berceau (1) en un point d'articulation avant (15) et en un point d'articulation arrière (17), **caractérisé en ce que** lesdits moyens communs (21a, 21b, 23) sont situés auxdits points d'articulation avant (15).

3. Dispositif selon l'une des revendications 1 ou 2, **caractérisé en ce que** lesdits moyens communs (21a, 21b, 23) comprennent des moyens de palier (21a, 21b) solidaires dudit berceau (1) et des moyens de vis et d'écrou (23) reliant lesdites biellettes (27) et lesdits bras de suspension (7) auxdits moyens de palier (21a, 21b).

4. Dispositif selon l'une quelconque des revendications précédentes, **caractérisé en ce que** lesdits moyens communs (21a, 21b, 23) comprennent des moyens d'amortissement des vibrations.

5. Dispositif selon la revendication 4, **caractérisé en ce que** lesdits moyens d'amortissement des vibrations comprennent des plots en matériau élastique.

6. Dispositif selon l'une quelconque des revendications précédentes, **caractérisé en ce que** lesdites biellettes (27) présentent une concavité orientée vers l'intérieur dudit véhicule automobile (5).

7. Véhicule automobile (5) comprenant une caisse (25) supportant un berceau suspendu (1), **caractérisé en ce que** ledit berceau (1) est relié à ladite caisse (25) par un dispositif conforme à l'une quelconque des revendications précédentes.

8. Véhicule automobile selon la revendication 7, **caractérisé en ce que** ledit berceau suspendu (1) est placé à l'avant de ladite caisse (25).

## Patentansprüche

1. Verbindungsvorrichtung zwischen einem aufgehängten Motorträger (1), welcher zwei angelegte Querlenker (7) trägt, und einer Karosserie (25) des Kraftfahrzeugs (5) von dem Typ, welche zwei Schwingarme (27) aufweist, welche zwischen dem Motorträger (1) und der Karosserie (25) zwischengesetzt sind, **dadurch gekennzeichnet, dass** sie mindestens teilweise gemeinsame Mittel (21a, 21b, 23) zum Verbinden der Schwingarme (27) und der Querlenker (7) mit dem Motorträger (1) aufweist.

2. Vorrichtung gemäß Anspruch 1, wobei jeder Querlenker (7) an dem Motorträger (1) an einem vorderen Anlenkungspunkt (15) und einem hinteren Anlenkungspunkt (17) angelenkt ist, **dadurch gekennzeichnet, dass** die gemeinsamen Mittel (21a, 21b, 23) an den vorderen Anlenkungspunkten (15) angeordnet sind.

3. Vorrichtung gemäß einem der Ansprüche 1 oder 2, **dadurch gekennzeichnet, dass** die gemeinsamen Mittel (21a, 21b, 23) Lagermittel (21a, 21b) aufweisen, welche fest mit dem Motorträger (1) verbunden sind, und Schrauben- und Mutter-Mittel (23), welche die Schwingarme (27) und die Querlenker (7) mit den Lagermitteln (21a, 21b) verbinden.

4. Vorrichtung gemäß einem der vorhergehenden Ansprüche, **dadurch gekennzeichnet, dass** die gemeinsamen Mittel (21a, 21b, 23) Vibrations-Dämpfungsmittel aufweisen.

5. Vorrichtung gemäß Anspruch 4, **dadurch gekennzeichnet, dass** die Vibrations-Dämpfungsmittel Klötze aus einem elastischen Material aufweisen.

6. Vorrichtung gemäß einem der vorhergehenden Ansprüche, **dadurch gekennzeichnet, dass** die Schwingarme (27) eine Konkavität aufweisen, welche in Richtung nach innen des Kraftfahrzeugs (5) gerichtet ist.

7. Kraftfahrzeug (5), aufweisend eine Karosserie (25), welche einen aufgehängten Motorträger (1) trägt, **dadurch gekennzeichnet, dass** der Motorträger (1) mit der Karosserie (25) durch eine Vorrichtung gemäß irgendeinem der vorhergehenden Ansprüche verbunden ist.

8. Kraftfahrzeug gemäß Anspruch 7, **dadurch gekennzeichnet, dass** der aufgehängte Motorträger (1) an der Vorderseite der Karosserie (25) angeordnet bzw. platziert ist.

## Claims

1. A connection device between a suspended cradle (1) bearing two articulated suspension arms (7) and a bodywork (25) of an automobile vehicle (5) of the type comprising two connecting rods (27) interposed between the cradle (1) and the bodywork (25), **characterised in that** it comprises means which are at least partially common (21a, 21b, 23) for the connection of these connecting rods (27) and these suspension arms (7) to the cradle (1).

2. A device as claimed in claim 1, each of the suspension arms (7) being articulated with respect to the cradle (1) at a front point of articulation (15) and at a rear point of articulation (17), **characterised in that** the common means (21a, 21b, 23) are situated at the front points of articulation (15).

3. A device as claimed in claim 1 or 2, **characterised in that** the common means (21a, 21b, 23) comprise bearing means (21a, 21b) rigid with the cradle (1) and screw and nut means (23) connecting the connecting rods (27) and the suspension arms (7) to the bearing means (21a, 21b).

4. A device as claimed in any one of the preceding claims, **characterised in that** the common means (21a, 21b, 23) comprise vibration damping means.

5. A device as claimed in claim 4, **characterised in that** the vibration damping means comprise blocks of resilient material.

6. A device as claimed in any one of the preceding claims, **characterised in that** the connecting rods (27) have a concavity facing the interior of the automobile vehicle (5).

7. An automobile vehicle (5) comprising a bodywork (25) bearing a suspended cradle (1), **characterised in that** this cradle (1) is connected to the bodywork (25) by a device as claimed in any one of the preceding claims.

8. An automobile vehicle as claimed in claim 7, **characterised in that** the suspended cradle (1) is placed at the front of this bodywork (25).
